(19) Europäisches Patentamt
European Patent Office
Office européen des brevets

(11) Publication number: **0 407 597 A1**

(12) **EUROPEAN PATENT APPLICATION published in accordance with Art. 158(3) EPC**

(21) Application number: **89912127.1**

(22) Date of filing: **02.11.89**

(86) International application number: **PCT/JP89/01136**

(87) International publication number: **WO 90/05117 (17.05.90 90/11)**

(51) Int. Cl.5: **C02F 3/12**

(30) Priority: **04.11.88 JP 278967/88**
**04.11.88 JP 278968/88**

(43) Date of publication of application: **16.01.91 Bulletin 91/03**

(84) Designated Contracting States: **DE FR GB**

(71) Applicant: **MITSUBISHI KASEI POLYTEC COMPANY**
**5-2, Marunouchi 2-chome Chiyoda-ku**
**Tokyo 100(JP)**

(72) Inventor: **AKIYAMA, Naoki Mitsubishi Monsanto Chemical Limiteed Yokkaichi Kenkyujo**
**1, Toho-cho, Yokkaichi-shi Mie 510(JP)**

(74) Representative: **Kyle, Diana et al**
**ELKINGTON AND FIFE Beacon House 113 Kingsway**
**London WC2B 6PP(GB)**

(54) **TREATMENT OF ACTIVATED SLUDGE.**

(57) The invention relates to a treatment of activated sludge to be used for treating an organic industrial waste water, which comprises using an alkyleneimine polymer as an agent for specifically preventing specific abnormality of activated sludge or killing a mold which causes bulking of the sludge.

EP 0 407 597 A1

# TREATMENT OF ACTIVATED SLUDGE

## FIELD OF THE ART

This invention is concerned with a method for preventing abnormal phenomena in activated sludge, namely those found during aeration of the activated sludge, such as production of foamed flocculate over an aeration vessel or sedimentation vessel, scumming and bulking, and those found on the recovered water obtained after sedimentation of the activated sludge such as foaming or scumming. Further, the present-invention relates to a method of preventing, abnormal phenomena on activated sludge by means of addition of a chemical characterized in that abnormal phenomena generated by a specified type of fungi or actinomycetes such as bulking of activated sludge. Still further, the present invention relates to a method of effectively preventing abnormal phenomena on activated sludge generated by a specific type of fungi.

There is an activated sludge process as one of methods of waste water disposal by a biological means. The process utilizes the nature of sludge formed when air is bubbled into waste water containing organic materials whereby some microorganism is grown therein, namely activated sludge, in that the activated sludge produces highly adsorptive flocks which sediment upon standing, due to their gravity being higher than that of water, namely approximately 1.003, thereby leaving the recovered water which is transparent. The activated sludge so precipitated is re-used as returned sludge.

Sewage, animal waste and various organic industrial waste water are usually disposed by an activated sludge process. It is known that, during the process, a flow rate of the waste water to be disposed and/or a content and/or type of the organic materials in the water to be disposed may vary and a type of microorganisms such as fungi or filamentous bacteria grown within sewage pipelines resulting in that the microbial flora in the

activated sludge may also be varied. For instance, it is sometimes observed that, when the content of a suspending solid materials in the waste water to be disposed is at a low level and a sludge retention time, RST, is increased, Nocardia amarae may be grown greatly in the activated sludge to produce mycolic acid which is surface active thereby to accelerate stabilization of foam, which are accumulated in the sludge over an aeration vessel and a final sedimentation vessel and may be carried by the recovered water whereby the water may have poor appearance due to the foam. When the microbial flora varies greatly, namely when a quantity of filamentous bacteria is increased, what is called "bulking phenomena" may take place such that sludge is expanded leading to poor sedimentation whereby sludge may come to the upper surface of the water under disposal and an amount of the sludge overflowing is increased, resulting in decrease in disposing capacity possibly until incapability of disposal. Once the phenomena takes place, the sludge becomes whitish, adsorptive of foam, and very light so that the sedimentation is difficult, whereby foamed flocculate on which the sludge has adsorbed of a thickness of several tens of centimeters may accumulate over the aeration vessel. The foam which has accumulated over an aeration vessel may produce bad smell due to decomposition of the sludge on the foam or overflow from the aeration vessel, and when the sludge adsorbed to the foam over the aeration vessel is carried on the recovered water, the water may have poor appearance due to the foam and the poor BOD and COD values, whereby the recovered water, when it is discharged into, e.g. a river, can induce secondary environmental pollution.

One of criteria for determining that activated sludge is normally working is a sludge volume index, SVI. The SVI value is defined as a volume of 1 g of activated sludge which has precipitated in 30 minutes. The SVI values of normally working activated sludge are 50 to

150, more particularly not higher than 100, but those for the activated sludge which has undergone bulking can be as high as 300 to 800. The increase in SVI values due to actinomycetes may be of the order of 200 to 300, and it is sometimes observed in the winter season that the level of the mass of activated sludge is raised whereby the sludge can overflow.

The activated sludge which contains foam or scum or which has undergone bulking may be such that its activity is difficult to restore whereby it may be required to replace the activated sludge by a fresh batch. Replacement of activated sludge may require that operation of the plant be stopped until the new sludge has been well broken in, which would require considerable alteration of production schedule in the plant of the factory. A civil sewage disposal plant may also suffer from possible environmental pollution which would be caused by reduction in BOD removal capability which would in turn be caused by overflow of bulking sludge or by reduction in sludge concentration, which could induce a social problem.

## BACKGROUND ART

As a method of preventing bulking of activated sludge, there have been proposed methods of Japanese Patent Publication Nos. 14274/1983 and 14275/1983.

The method disclosed in Japanese Patent Publication No. 14274/1983 comprises adding to activated sludge one or more of a dithiocarbamate of a specified structure as its aqueous solution. The method, however, is directed only to the case where the bulking has been generated by unusual growth of fungi, and is thus assumed not to be effective for other cases. It would be other problems that 4 days or more, or even 10 days or more, may be required even when the abnormal state of the sludge is relatively not so prominent and that addition of the chemical in a considerable amount should be made every day.

The method disclosed in Japanese Patent Publication No. 14275/1983 comprises adding to activated sludge a composition comprising one or more of an amino acid such as valine, leucine, isoleucine, glutamic acid, phenylalanine or tyrosin. The method requires adding the composition in an amount at such a high level of 0.5 to 3 $kg/m^3$ of waste water continuously for 3 hours or more, and it would also be a problem that 24 hours or more are required until the effect is noted.

Bulking phenomena is caused by unusual growth of filamentous bacteria or fungi such as _Sphaerotilus_, _Thiothrix_, _Aspergillus_, _Penicillium_ and is also caused by generation of sticky jelly-like materials in activated sludge due to seasonal or alimentary factors whereby the activated sludge becomes to be less sedimentable. For the latter case, it is said effective to add to the waste water $ZnCl_2$ or a polymeric flocculant of a cationic polyacrylamide. The experiments made by the present inventors, however, tell that the method may sometimes entail formation of foamed sludge at an aeration vessel or somewhere else and the activated sludge so foamed has capability of disposing waste water so lowered that no remarkable prevention of bulking of sludge is obtainable.

It is also known that foaming and scumming, and bulking phenomena, caused by actinomycetes may be acted upon by spraying such a defoamant in spray water as a carboxylic acid ester to an aeration vessel and a final sedimentation vessel. The experiments made by the present inventors, however, tell that spraying the defoamant may not prevent foaming but only destroy the foamed flocculate formed, whereby no remarkable effect is obtainable.

Furthermore, it has been tried to restore normal microbial flora not by relying on addition of chemicals but just by modifying operation conditions such as an anaerobic-aerobic treatment or addition of a considerable amount of a suspended solid material (SS) without using a

preliminary sedimentation vessel, but no satisfactory processes have yet been found for prevention of bulking caused by unusual growth of at least filamentous bacteria of type 021N, type 1701, type 1702 and type 0041.

At conventional final disposal plants designed for city waste water, bulking which takes place most frequently is that caused by filamentous bacteria, and it is reported that the microorganisms which cause the bulking are Sphaerotilus and Beggiatoa. See J. Sewer Society of Japan, Vol. 22, No. 252, pages 2-12 (1985). Recent development in the sewer system has made it a common practice to dispose water from rain and waste water from daily life separately. As the result, it is assumed that some change must have occurred in the filamentous bacteria which would cause bulking in the disposal by activated sludge process of city sewage which is waste water from daily life.

## DISCLOSURE OF THE INVENTION

It is the object of the present invention to specifically prevent abnormality in specified activated sludge in response to the recent change in city sewage and to specifically destroy filamentous bacteria causing bulking of the sludge, and the present invention achieves the objects by the use of a specified water-soluble polymer as a chemical for preventing the abnormality or for preventing the bulking.

Thus, the method of preventing bulking of activated sludge according to the present invention comprises adding, to activated sludge which will undergo or has undergone bulking caused by filamentous bacteria or to waste water containing the activated sludge, 0.05 to 25 parts per 100 parts of the activated sludge, dry basis, of an alkyleneimine polymer.

Further, the method of preventing abnormal phenomena on activated sludge in the waste water disposal by an activated sludge process according to another embodiment of the present invention comprises adding, to activated

sludge or waste water containing activated sludge, 0.05 to 25 parts by weight per 100 parts by weight of the activated sludge, dry basis, of an alkyleneimine so that the activated sludge will be freed from the actinomycetes which is to cause foaming, scumming or bulking on the recovered water after sedimentation of the activated sludge.

According to the present invention, the objects given above are attained whereby bulking of activated sludge caused by filamentous bacteria such as type 021N, type 1701, type 1702 or type 0041 is specifically prevented.

More particularly, the water soluble polymer in accordance with the present invention is such that addition of the polymer at the time when the SVI value is likely to increase or has been increased due to abnormal growth of the filamentous bacteria will substantially prevent further increase of the SVI value and maintain the SVI value at the original level or lower. Furthermore, the chemical in accordance with the present invention destroys the filamentous structure of the bacteria, and even though the destruction product may be carried by the recovered water and discharged from the vessel, the recovered water is found to have almost no increase in the BOD whereby the recovered water will be acceptable. Further, the chemical in accordance with the present invention has a long effective life once it is added.

Practice of the present invention will thus add a lot to effective control of an activated sludge process.

According to another embodiment of the present invention for preventing abnormality, the objects given above are attained whereby foaming and scumming of the recovered water and bulking phenomena of the sludge at the aeration vessel will be specifically prevented.

More particularly, the water soluble polymer in accordance with the present invention is such that

addition of the polymer at the time when foaming phenomena are found at the aeration vessel and the foam is likely to accumulate as scum or when bulking phenomena are found will substantially prevent further increase in the foamed flocculate and maintain the SVI value at the original level or lower. Further, the chemical in accordance with the present invention has a long effective life once it is added.

Practice of this embodiment of the present invention will thus add a lot to effective control of an activated sludge process.

In addition to the advantages given hereinabove, the present invention can also enjoy the following advantages.

(1) It is possible, thanks to the present invention, to suppress increase in the SVI of activated sludge in a short time simply by addition of an alkyleneimine polymer to an activated sludge process; (2) no volume increase or bulking of activated sludge in an aeration vessel may take place, whereby it is possible to maintain the sedimentation volume small and the concentration of activated sludge high, so that the BOD removal effect will be greatly increased; and (3) sedimentation/separation of activated sludge at a sedimentation vessel takes place very easily due to the present invention.

The alkyleneimine polymer used in the present invention is known as it is and its use as a precipitant is known. It is, however, assumed to be unexpected that the polymer destroys actinomycetes and specific group of filamentous bacteria and that abnormal phenomena and bulking of activated sludge are thereby prevented.

## BEST MODE OF PRACTICE OF THE PRESENT INVENTION

As stated hereinabove, the present invention is concerned with a method of preventing abnormal phenomena in activated sludge wherein specified abnormality of

activated sludge and bulking of activated sludge caused by specified filamentous bacteria are prevented.

Activated sludge to be treated

The activated sludge to which the present invention is applicable is that which will cause foaming or scumming in the recovered water from the activated sludge process after precipitation of the activated sludge and that which will undergo bulking caused by at least one of filamentous bacteria such as type 021N, type 1701, type 1702 and type 0041.

Examples of actinomycetes contained in and acting undesirably upon activated sludge include Nocardia amarae and Rhodococcus rhodochrous.

When it is desired that these actinomycetes be isolated, they can easily be obtained from foamed flocculate or scum over an aeration vessel for activated sludge or from the sludge.

The filamentous bacteria which are type 021N and type 0041 are those defined in D.H. Eikelboom: Prog. Water Tech., Vol. 8, No. 6, pages 153-161 (1977).

The filamentous bacteria which are type 1701 and type 1702 are those defined in P.F. Strom and D. Jenkins: Journal WPCF, Vol. 56, No. 5, pages 449-459 (1984).

Activated sludge in city sewage containing these filamentous bacteria have recently been popular as stated hereinabove, and it may thus be easy to obtain these microorganisms from such sewage upon necessity.

Alkyleneimine polymers

The chemical used in the present invention is an alkyleneimine polymer in its chemistry, and those represented by the following formula are satisfactory.

$$-\!\!\left( R\text{-}NH \right)_n\!\!-$$

wherein R is an alkylene, preferably an alkylene having 2 to 8 carbon atoms of a linear or a branched structure. The plurality of R are the same or different. "n" indicates degree of polymerization of the alkyleneimine

polymer and is a number such that the molecular weight is preferably 300 or higher and preferably 70,000 or lower.

The alkyleneimine polymer can be of such a perfectly linear structure as shown by the formula but can be of a branched structure. Examples of such alkyleneimine polymers include ethyleneimine polymers, propyleneimine polymers, trimethyleneimine polymers, tetramethyleneimine polymers, hexamethyleneimine polymers and copolymers of these, and mixtures of at least two of these homo- and co-polymers. Among these, ethyleneimine polymers are preferable from an economical point of view. Ethyleneimine polymers are prepared by ring-opening polymerization of ethyleneimine by a cationic catalyst, or alternatively by a reaction of an ethylene dihalide with ethylene diamine or with ammonia or condensation of an ethanolamine.

In the present invention, the molecular weight of alkyleneimine polymers is 300 or higher and 70,000 or lower, preferably 50,000 or lower, more preferably 10,000 or lower. Excessively low molecular weight is not preferable because alkyleneimine polymers of such a low molecular weight is less adsorbed onto the activated sludge and the effect of preventing abnormal phenomena caused by actinomycetes will not continue long. When the molecular weight is higher than 70,000, activated sludge may produce such large flocks with actinomycetes occluded therein that the sludge precipitates easily whereby the actinomycetes appear to have been reduced, but foaming and scumming of the recovered water caused by actinomycetes may again take place in a few days, such a higher molecular weight being thus not preferable. When the activated sludge to be treated contains specified filamentous bacteria, excessively low molecular weight is not preferable in that the alkyleneimine polymer of such a low molecular weight is less adsorbed onto the activated sludge whereby the effect of preventing bulking will not continue long, and a molecular weight higher

used may destroy the filamentous bacteria so rapidly that the recovered water may rapidly become turbid or that the bacteria so destroyed may be carried by the recovered water possibly increasing the BOD of the water, such an excessive quantity being thus not preferable. The quantity of the polymer may preferably be 0.05 to 25, more preferably 0.1 to 10, parts by weight per 100 parts by weight of activated sludge, dry basis.

Once an alkyleneimine polymer is added in a quantity given above to activated sludge, no increase in the SVI nor flowing out of sludge caused by foaming or scumming may be noted for at least a month. When it is noted that foamed flocculate with sludge occluded therein are likely to be accumulate over an aeration vessel, an alkyleneimine in a quantity given above may then be added.

Once an alkylamine polymer is added in a quantity given above to activated sludge, no increase in the SVI may be noted for at least a month. When it is noted that the SVI is likely to increase, an alkyleneimine polymer in a quantity given above may then be added. It has been observed that rapid growth of filamentous bacteria is suppressed for about a month.

<u>EXPERIMENTAL EXAMPLE</u>

<u>Example A-1</u>

In a public sewage disposal plant in which the waste water of a separation type city sewage having a BOD value of 220 mg/L and a suspended solid (SS) of 120 mg/L was disposed at a monthly average rate of 3,500 $m^3$/day, the aeration vessel had a sedimentary sludge volume index (SVI) of ca. 200 and the content in the vessel generated a special smell. A foamed floccculate carrying the sludge and having been shaded into dark brown was left at the upper part of the aeration vessel in the thickness of ca. 10 cm to ca. 20 cm without disappearance for any length of time. The foamed flocculate ran over the top of the aeration vessel and fouled the places therearound.

than 70,000 will produce large flocks occluding the filamentous bacteria which precipitate easily but bulking caused by the bacteria will take place again in a few days, such a high molecular weight being thus not preferable.

It is preferable and is a usual practice to use the alkyleneimine polymer as a solution which is preferably an aqueous solution in preventing abnormal phenomena or bulking of activated sludge.

<u>Abnormal phenomena or bulking of activated sludge</u>

Prevention of bulking of activated sludge by a chemical in accordance with the present invention is essentially the same as prior art process except for the facts that the activated sludge whose abnormal phenomena or bulking is to be prevented is that shown hereinabove and that possible alteration of operation conditions which may occur due to the type of activated sludge used.

In particular, there is provided an aqueous solution of an alkyleneimine polymer in a suitable concentration such as, e.g. 0.1 to 10% by weight, and the aqueous solution may be added one of or combinations of at least two of the following methods.

(1) The solution is added to and admixed with waste water flowing in, which will then be sent to an aeration vessel;

(2) The solution is added to an aeration vessel or a sedimentation vessel where bulking of activated sludge is taking place; and

(3) The solution is added to returned sludge.

The quantity of an alkyleneimine polymer used is such that excessively small quantity is not preferable since the object of the present invention may not be attained, while excessively large quantity on the other hand is not preferable since some of the polymer may be flown out with the recovered water. When the activated sludge to be treated is that containing specified filamentous bacteria, excessive quantity of the polymer

The foamed flocculate running over the vessel was decomposed and generated a foul smell. More adversely, the foamed flocculate containing the sludge flew into the secondary sedimentation vessel and flowed out together with the recovered water to increase the values of the BOD and COD of the effluent water to a level of higher than 20 mg/L, respectively. This plant had a mixed liquor suspended solid (MLSS) in a returned sludge of 4,500 mg/L, and the aeration vessel had an MLSS of 2,100 mg/L.

When the sludge in the aeration vessel and the sedimentation vessel in this plant were stained by the Gram's method and observed with a phase contrast microscope, a lot of typical actinomycetes which had adhered to the flocculate were observed in the sludge and its peripheral regions. Actinomycetes were contained in the sludge which produced mycolic acid, and the sludge adhered to mycolic acid or the microorganisms themselves having a filamentous shape, so that the density of the sludge was decreased thus causing the sedimentation of the sludge only with difficulty.

The sludge in the aforementioned public sewage disposal plant was charged in the miniaturized model plant of an activated sludge disposal plant which was made on the assumption of an actual public sewage disposal plant and had an aeration vessel capacity of 5 liters and a sedimentation vessel capacity of 1.7 liters, and the dissolved oxygen in the aeration vessel was controlled to a range of 1 to 2 mg/L. The influent raw water in the aforementioned public sewage disposal plant was continuously added to the miniaturized model plant with the BOD loading of ca. 0.4 kg/kg MLSS/day, and the plant was worked continuously with a sludge returning rate of 50%.

Using this miniaturized model plant for the activated sludge disposal plant, 1.0 g of an ethyleneimine polymer having an average molecular weight

of 10,000 (manufactured by NIPPON SHOKUBAI KAGAKU KOGYO CO., LTD., Japan; trade name, Epomine; grade SP-200) was continuously added, after being diluted with tap water to a dilution ratio of 100 times, to the returned sludge line.

After 14 hours of the continuous addition, the dark brown foamed flocculate which retained at the upper part of the aeration vessel started to decrease gradually. After 24 hours, a lot of actinomycetes was observed in the recovered water from the sedimentation vessel, and the actinomycetes in the aeration vessel started to leave from the sludge to increase the density of the floc.

The SVI value was decreased to 150, and the level of the sludge surface in the sedimentation vessel was also lowered. After 60 hours, the SVI value was 100. It could be confirmed that actinomycetes had been extensively decreased in the sludge in the aeration vessel. Also, the activated sludge started to form a firm floc as compared with that before addition of the polymer. After 150 hours, almost of the dark brown foamed flocculate retained at the upper layer of the aeration vessel disappeared and the sedimentation capability was considerably improved, so that the SVI value reached 90, in the same time the returned sludge concentration was increased to the MLSS value of 6,000 mg/L and the sludge concentration in the aeration vessel was also increased to the MLSS value of 2,600 mg/L. The recovered water of a good quality could be thus obtained, and the sludge stopped overflowing due to the ascent of the sludge surface in the sedimentation vessel.

Although the actinomycetes which had been destroyed was flowed out together with the recovered water, the suspended solid content was less than 5 mg/L with the BOD and COD values of less than 5 mg/L and less than 20 mg/L, respectively, and thus it had a good quality as a recovered water.

For about 1 month after the addition of an ethyleneimine polymer, the rapid propagation of actinomycetes was suppressed although influent raw water contained actinomycetes.

Example A-2

The activated sludge containing actinomycetes in Example A-1 was charged in a miniaturized model plant of an activated sludge disposal plant which was made on the assumption of an actual public sewage disposal plant and had an aeration vessel capacity of 5 liters and a sedimentation vessel capacity of 1.7 liters, and the plant was continuously operated under the same conditions of the dissolved oxygen in the aeration vessel, the amount of the influent raw water added and the returning ratio of the sludge as described in Example A-1.

Using this miniaturized model plant for the activated sludge disposal plant, 1.0 g of an ethyleneimine polymer having an average molecular weight of 30,000 (manufactured by NIPPON SHOKUBAI KAGAKU KOGYO CO., LTD.; trade name, Epomine; grade SP-300) was continuously added, after being diluted with tap water to a dilution ratio of 100 times, to the returned sludge line for 50 hours.

After 10 hours of the continuous addition, the d brown foamed flocculate which retained at the upper p[illegible] of the aeration vessel started to decrease gradually. After 15 hours, a lot of actinomycetes started to be observed in the recovered water in the sedimentation vessel, and the actinomycetes in the aeration vessel started to leave from the sludge to increase the density of the floc. The SVI value was decreased to 150, and the level of the sludge surface in the sedimentation tank was also lowered. After 50 hours, the SVI value reached 120. It could be confirmed that actinomycetes had been extensively decreased in the sludge in the aeration vessel.

Also, the activated sludge started to form a firm floc as compared with that before addition of the polymer. After 100 hours, almost of the dark brown foamed flocculate retained at the upper layer of the aeration vessel disappeared and the sedimentation capability was extensively improved, so that the SVI value reached 100, in the same time the returned sludge concentration was raised to the MLSS value of 5,600 mg/L and the sludge concentration in the aeration vessel was also raised to the MLSS value of 2,500 mg/L. The recovered water having a good quality could be thus obtained, and the sludge stopped overflowing due to the ascent of the sludge surface in the sedimentation vessel.

Although the actinomycetes which had been destroyed was flowed out together with the recovered water, the suspended solid content was less than 5 mg/L with the BOD and COD values of less than 5 mg/L and less than 20 mg/L, respectively, and thus it had a good quality as a recovered water.

Example A-3

The activated sludge containing actinomycetes as in Example A-1 was charged in the same miniaturized model plant of an activated sludge disposal plant as in Example A-1, and the plant was continuously operated under the same conditions of the dissolved oxygen in the aeration vessel, the amount of the influent raw water added and the returning ratio of the sludge as described in Example A-1.

Using this miniaturized model plant for the activated sludge disposal plant, 0.3 g of an ethyleneimine polymer having an average molecular weight of 70,000 (manufactured by NIPPON SHOKUBAI KAGAKU KOGYO CO., LTD.; trade name, Epomine; grade SP-1000) and 0.7 g of an ethyleneimine polymer having an average molecular weight of 10,000 (manufactured by NIPPON SHOKUBAI KAGAKU KOGYO CO., LTD.; trade name, Epomine; grade SP-200) were continuously added, after being diluted with tap water to

a dilution ratio of 100 times, to the returned sludge line for 48 hours.

After 14 hours of the continuous addition, the dark brown foamed flocculate which retained at the upper part of the aeration vessel was decreased in a proportion of about 20%. A lot of actinomycetes was observed in the recovered water from the sedimentation vessel, and the actinomycetes in the aeration vessel started to peel off from the sludge to increase the density of the floc.

The SVI value was decreased to 170, and the level of the sludge surface in the sedimentation vessel was also lowered. After 48 hours, the SVI value reached 130. It could be confirmed that actinomycetes had been extremely decreased in the sludge in the aeration vessel. Also, the activated sludge started to form a firm floc as compared with that before adding the polymer. After 150 hours, almost of the dark brown foamed flocculate retained at the upper layer of the aeration vessel disappeared and the sedimentation capability was extensively improved, so that the SVI value reached 110, in the same time the returned sludge concentration was increased to the MLSS value of 5,400 mg/L and the sludge concentration in the aeration vessel was also increased to the MLSS value of 2,300 mg/L. The recovered water having a good quality could be thus obtained, and the sludge stopped overflowing due to the ascent of the sludge surface in the sedimentation vessel.

Although the actinomycetes which had been destroyed was flowed out together with the recovered water, the suspended solid content was less than 5 mg/L with the BOD and COD values of less than 5 mg/L and less than 20 mg/L, respectively, and thus it had a good quality as a recovered water.

Example A-4

The activated sludge containing actinomycetes in Example A-1 was charged in the same miniaturized model plant of an activated sludge disposal plant as in Example

A-1, and the plant was continuously operated under the same conditions of the dissolved oxygen in the aeration vessel, the amount of the influent raw water added and the returning ratio of the sludge as described in Example A-1.

Using this miniaturized model plant for the activated sludge disposal plant, 0.6 g of an ethyleneimine polymer having an average molecular weight of 1,000 (manufactured by NIPPON SHOKUBAI KAGAKU KOGYO CO., LTD.; trade name, Epomine; grade SP-100) and 0.6 g of an ethyleneimine polymer having an average molecular weight of 30,000 (manufactured by NIPPON SHOKUBAI KAGAKU KOGYO CO., LTD.; trade name, Epomine; grade SP-200) were continuously added, after being diluted with tap water to a dilution ratio of 100 times, to the returned sludge line for 50 hours.

After 10 hours of the continuous addition, the dark brown foamed flocculate which retained at the upper part of the aeration vessel was decrease in a proportion of about 30%. A lot of actinomycetes was observed in the recovered water from the sedimentation vessel, and the actinomycetes in the aeration vessel started to leave from the sludge to increase the density of the floc.

The SVI value was decreased to 160, and the level of the sludge surface in the sedimentation vessel was also lowered. After 50 hours, the SVI value reached 130. It could be confirmed that actinomycetes had been extremely decreased in the sludge in the aeration vessel. Also, the activated sludge started to form a firm floc as compared with that before adding the polymer. After 150 hours, almost of the dark brown foamed flocculate retained at the upper layer of the aeration vessel disappeared and the sedimentation capability was extensively improved, so that the SVI value reached 100, in the same time the returned sludge concentration was raised to the MLSS value of 5,500 mg/L and the sludge concentration in the aeration vessel was also increased

to the MLSS value of 2,400 mg/L. The recovered water having a good quality could be thus obtained, and the sludge stopped overflowing due to the ascent of the sludge surface in the sedimentation vessel.

Although the actinomycetes which had been destroyed was flowed out together with the recovered water, the suspended solid content was less than 5 mg/L with the BOD and COD values of less than 5 mg/L and less than 20 mg/L, respectively, and thus it had a good quality as a recovered water.

Comparative Example A-1

A defoamant was added to the upper part of the aeration vessel under the same activated sludge and operation conditions as in Example A-1 instead of addition of the reaction composition of the present invention. The defoamant used was an ester compound of a special paraffin (manufactured by DAITO YAKUHIN KOGYO K.K.; "MINEKON C") having been diluted with water to a dilution of 0.1% by weight was added with a rate of 8 ml/minute to the upper part of the aeration vessel for 3 days. At the parts where the defoamant was spread, the anti-foaming effect was exhibited. However, a large amount of the defoamant was necessary in order to obtain a satisfactory effect.

With the use of the defoamant, it was impossible fundamentally to release actinomycetes in sludge from the activated sludge.

Example B-1

In a public sewage disposal plant in which the waste water of a separation type city sewage having a BOD value of 220 mg/L and a suspended solid content (SS) of 90 mg/L was disposed at a monthly average rate of 9,000 $m^3$/day, the aeration vessel had a sedimentary sludge volume index (SVI) of higher than 500, a mixed liquid suspended solid (MLSS) in a returned sludge of 2,000 mg/L or less and the MLSS value in the aeration vessel of 2,100 mg/L or less. The separability of the recovered water and the sludge at

the final sedimentation vessel had been extremely lowered. When the sludge in the aeration vessel and the sedimentation vessel in this plant were stained by the Gram's method and observed with a phase microscope, a many masses of the filamentous bacteria of the type 021N rather than the floc forming bacteria were observed between flocs in the sludges.

The sludge in the aforementioned public sewage disposal plant was charged in the miniaturized model plant of an activated sludge disposal plant which was made on the assumption of an actual public sewage disposal plant and had an aeration vessel capacity of 3 liters and a sedimentation vessel capacity of 1 liter, and the dissolved oxygen in the aeration vessel was controlled to a range of 1 to 2 mg/L. The influent raw water in the aforementioned public sewage disposal plant was continuously added to the miniaturized model plant so as the BOD load to be at the level of ca. 0.4 kg/kg MLSS/day, and the plant was further worked continuously with a sludge returning rate of 50%.

Using this miniaturized model plant for the activated sludge disposal plant, 0.5 g of an ethyleneimine polymer having an average molecular weight of 10,000 (manufactured by NIPPON SHOKUBAI KAGAKU KOGYO CO., LTD.; trade name, Epomine; grade SP-200) was continuously added, after being diluted with tap water to a dilution ratio of 100 times, to the returned sludge line for 48 hours.

After 12 hours from the start of the continuous addition, a lot of products which were possibly the destroyed filamentous bacteria of the type 021N were observed in the recovered water from the sedimentation vessel, and the type 021N in the aeration vessel started to be destroyed with decrease of the SVI value to 200 and descent of the level of sludge surface in the sedimentation vessel. After 48 hours, the SVI value reached 110. It could be confirmed that filamentous

bacteria had been extensively decreased in the sludge in the aeration vessel. Also, the activated sludge started to form a firm floc as compared with that before adding the polymer. After 96 hours, the sedimentation capability was considerably improved and the SVI value reached 70, so that the returned sludge concentration was increased to the MLSS value of 7,000 mg/L and the sludge concentration in the aeration vessel was also increased to the MLSS value of 2,700 mg/L. It is believed from these results that the influent raw water disposing capability of the activated sludge has been extensively improved as compared with the capability of the activated sludge prior to the addition of the polymer.

Although the filamentous bacteria of the type 021N which had been destroyed was flowed out, the suspended solid content was 5 mg/L with the BOD and COD values of 20 mg/L, respectively, and thus it had a good quality as a recovered water.

For about 2 months after the addition of water-soluble polymer, the rapid propagation of these filamentous bacteria was suppressed though influent raw water possibly contained the type 021N.

Example B-2

In a public sewage disposal plant in which the waste water of a separation type city sewage having a BOD value of 200 mg/L and a suspended solid content (SS) of 50 mg/L was disposed at a monthly average rate of 12,000 $m^3$/day, the aeration vessel had a sedimentary sludge volume index (SVI) of higher than 400, a mixed liquor suspended solid (MLSS) in a returned sludge of 2,300 mg/L or less and the MLSS value in the aeration vessel of 2,100 mg/L or less. Thus, the separability of recovered water and the sludge at the final sedimentation vessel have been extremely lowered. When the sludges in the aeration vessel and the sedimentation vessel in this plant were stained by the Gram's method and observed with a phase contrast microscope, a many masses of the filamentous bacteria of

the typical types 1701 and 1702 rather than the floc forming bacteria were observed in the sludge and the peripheral regions thereof.

The sludge in the aforementioned public sewage disposal plant was charged in the miniaturized model plant of an activated sludge disposal plant which was made in the same manner as in Example B-1, and continuous operation was conducted under the same conditions of the dissolved oxygen amount in the aeration vessel, added amount of influent raw water and the sludge returning rate as described in Example B-1.

Using this miniaturized model plant for the activated sludge disposal plant, 0.6 g of an ethyleneimine polymer having an average molecular weight of 30,000 (manufactured by NIPPON SHOKUBAI KAGAKU KOGYO CO., LTD.; trade name, Epomine; grade SP-300) was continuously added, after being diluted with tap water to a dilution ratio of 100 times, to the returned sludge line for 50 hours.

After 15 hours from the start of the continuous addition, a lot of products which were possibly the destroyed filamentous bacteria of the types 1701 and 1702 were observed in the recovered water from the sedimentation vessel, and the types 1701 and 1702 in the aeration vessel started to be destroyed with decrease in the SVI value to 220 and descent of the level of sludge surface in the sedimentation vessel. After 48 hours, the SVI value reached 130. It could be confirmed that filamentous bacteria had been extensively decreased in the sludge in the aeration vessel. After 70 hours, it was also observed that the filamentous shape of the filamentous bacteria of the types 1701 and 1702 had been destroyed and flowed out together with the recovered water leaving substantially no filamentous bacteria of the types 1701 and 1702 in the activated sludge contained in the aeration vessel and the sedimentation vessel.

The activated sludge formed a more firm floc as compared with that before addition of the polymer. As a result, the sedimentation capability was considerably improved and the SVI value reached 90, so that the returned sludge concentration was raised to the MLSS value of 6,100 mg/L and the sludge concentration in the aeration vessel was also raised to the MLSS value of 2,300 mg/L.

Although the filamentous bacteria of the types 1701 and 1702 which had been destroyed was flowed out, the suspended solid content was 5 mg/L with the BOD and COD values of 20 mg/L, respectively, and thus it had a good quality as a recovered water.

Example B-3

In a public sewage disposal factory in which the waste water of a separation type city sewage having a BOD value of 200 mg/L and a suspended solid (SS) of 120 mg/L was disposed at a monthly average rate of 12,000 $m^3$/day, the aeration vessel had a sedimentary sludge volume index (SVI) of higher than 600, the MLSS value in a returned sludge of 2,000 mg/L or less and the MLSS value in the aeration vessel of 1,000 mg/L or less. Thus, the separability of recovered water and the sludge at the final sedimentation vessel have been extremely lowered. When the sludges in the aeration vessel and the sedimentation vessel in this plant were stained by the Gram's method and observed with a phase contrast microscope, a many masses of the typical type 0041 were observed in the sludge and the peripheral regions thereof.

The sludge in the aforementioned public sewage disposal plant was charged in the miniaturized model plant of an activated sludge disposal plant which was made in the same manner as in Example B-1, and continuous operation was conducted under the same conditions of the dissolved oxygen amount in the aeration vessel, added

amount of influent raw water and the sludge returning rate as described in Example B-1.

Using this miniaturized model plant for the activated sludge disposal plant, 0.3 g of an ethyleneimine polymer having an average molecular weight of 70,000 (manufactured by NIPPON SHOKUBAI KAGAKU KOGYO CO., LTD.; trade name, Epomine; grade SP-1000) and 0.3 g of an ethyleneimine polymer having an average molecular weight of 1,000 (manufactured by NIPPON SHOKUBAI KAGAKU KOGYO CO., LTD.; trade name, Epomine; grade SP-110) were continuously added, after being diluted with tap water to a dilution ratio of 100 times, to the returned sludge line for 48 hours.

After 13 hours from the start of the continuous addition, a lot of products which were possibly the destroyed filamentous bacteria of the type 0041 were observed in the recovered water from the sedimentation vessel, and the type 0041 in the aeration vessel started to be destroyed with decrease in the SVI value to 250 and descent of the level of sludge surface in the sedimentation vessel. After 48 hours, the SVI value reached 140. It could be confirmed that filamentous bacteria had been extensively decreased in the sludge in the aeration vessel. After 100 hours, it was also observed that the filamentous bacteria of the type 0041 had been destroyed and flowed out together with the recovered water leaving substantially no filamentous bacteria of the type 0041 in the activated sludge contained in the aeration vessel and the sedimentation vessel.

Example B-4

The activated sludge containing the type 021N described in Example B-1 was charged in the miniaturized model plant of an activated sludge disposal plant which was made in the same manner as in Example B-1, and continuous operation was conducted under the same conditions of the dissolved oxygen amount in the aeration

vessel, added amount of influent raw water and the sludge returning rate as described in Example B-1.

Using this miniaturized model plant for the activated sludge disposal plant, 0.3 g of an ethyleneimine polymer having an average molecular weight of 1,800 (manufactured by NIPPON SHOKUBAI KAGAKU KOGYO CO., LTD.; trade name, Epomine; grade SP-018) and 0.2 g of an ethyleneimine polymer having an average molecular weight of 30,000 (manufactured by NIPPON SHOKUBAI KAGAKU KOGYO CO., LTD.; trade name, Epomine; grade SP-300) were continuously added, after being diluted with tap water to a dilution ratio of 100 times, to the returned sludge line for 40 hours.

After 12 hours from the start of the continuous addition, a lot of products which were possibly the destroyed filamentous bacteria of the type 021N were observed in the recovered water from the sedimentation vessel, and the type 021N in the aeration vessel started to be destroyed with decrease in the SVI value to 230 and descent of the level of sludge surface in the sedimentation vessel. After 70 hours, the SVI value reached 130. It could be confirmed that filamentous bacteria had been extensively decreased in the sludge in the aeration vessel. After 96 hours, it was also observed that the filamentous bacteria of the type 021N had been destroyed and flowed out together with the recovered water leaving substantially no filamentous bacteria of the type 021N in the activated sludge contained in the aeration vessel and the sedimentation vessel.

Comparative Example B-1

When an aqueous solution of sodium hypochlorite having an effective chlorine content of 5% was added to the returned sludge line in a proportion of 0.8 g/day for 8 days instead of addition of the reaction product of the present invention under the same activated sludge and operation conditions as in Example B-1, the filamentous

bacteria in the sludge started to be decreased, but the SVI value remained at an unsatisfactory level of 350. When sodium hypochlorite was added further in a proportion of 0.8 g/day, the SVI value was decreased to 180. However, the recovered water became turbid, and the suspended solid content exceeded 20 mg/L. While the BOD of the treated water remained at a level of 20 mg/L, the COD value exceeded 30 mg/L. The state of the activated sludge was observed with a microscope, and the floc was destroyed and no protozoa was observed.

The turbid appearance was obtained by not only the flowing out of the destroyed filamentous bacteria but also the flowing out of the destroyed useful bacteria. The turbid appearance remained not only during the addition of the aqueous solution of sodium hypochlorite (having an effective chlorine content of 5%) but also for further three days after the solution had been added, and the continuous flowing out of the destroyed useful floc forming bacteria was observed. Therefore, the recovered water kept the turbid appearance and thus could not be said to be in the good state.

When the recovered water was released from the turbid state after the addition of the aqueous solution of sodium hypochlorite (having an effective chlorine content of 5%) to the returned sludge line was stopped, the system immediately lost the capability of sterilizing the type 021N, the filamentous bacteria contained in the sludge started rapid increase again and the SVI value reached a level of 500 in 2 days.

Also, in an actual public sewage disposal plant in which the waste water of city sewage is disposed, an aqueous solution of sodium hypochlorite (having an effective chlorine content of 5%) has a high toxicity, so that the addition must be conducted with a competent device and with caution. It promotes the corrosion of appliances, and thus the place at which the chemical is added is restricted.

Comparative Example B-2

When a cationic polyacrylamide (manufactured by DIAFLOCK K.K., Japan; C-402) was added to the returned sludge line in a proportion of 5%/day to the sludge in the aeration vessel instead of addition of the reaction product of the present invention under the same activated sludge and operation conditions as in Example B-1, the SVI value reached 180 under the state where the type 021N was contained.

However, when the addition of the chemical was stopped, the sedimentation capability decreased gradually and the SVI value reached 500 after 4 days. It was confirmed by observing the sludge with a microscope that a lot of filamentous bacteria of the type 021N were present at the peripheral regions of the mass of the sludge. When the addition was repeated, the sludge floated with foams occluded therein and the good state could not be realized in the aeration vessel and the sedimentation vessel.

## INDUSTRIAL APPLICABILITY

The present invention is concerned with an activated sludge process, and is suitable for preventing abnormal phenomena of activated sludge such as the bulking phenomenon of the activated sludge, foaming or scumming of the sludge in the aeration vessel of the activated sludge and the recovered water after sedimentation of the activated sludge.

CLAIMS:

1. A method of preventing bulking of activated sludge which comprises adding, to activated sludge which will undergo or has undergone bulking caused by filamentous bacteria or to waste water containing the activated sludge, 0.05 to 25 parts by weight per 100 parts by weight of the activated sludge, dry basis, of an alkyleneimine polymer.

2. The process according to claim 1, wherein said filamentous bacteria are at least one of the filamentous bacteria of the type 021N, the type 1701, the type 1702 and the type 0041.

3. The process according to claim 1, wherein said alkyleneimine polymer comprises the unit represented by the following formula:

$$-(R-NH)_n-$$

wherein R represents an alkylene group having 2 to 8 carbon atoms of a straight or branched structure, a plurality of R may be the same or different, and n indicates the polymerization degree of the alkyleneimine polymer and denotes a number so that the polymer has a molecular weight in the range from 300 to 70,000.

4. The process according to claim 3, wherein said alkyleneimine polymer has a molecular weight of 50,000 or lower.

5. The process according to claim 4, wherein said alkyleneimine polymer has a molecular weight of 10,000 or lower.

6. A method of preventing abnormal phenomena on activated sludge in the waste water disposal by an activated sludge process, which comprises adding, to the

activated sludge or to waste water containing it, 0.05 to 25 parts by weight per 100 parts by weight of the activated sludge, dry basis, of an alkyleneimine polymer, so that the activated sludge will be freed from the actinomycetes which is to cause foaming, scumming or bulking on the recovered water after sedimentation of the activated sludge.

7. The process according to claim 6, wherein said alkyleneimine polymer comprises the unit represented by the following formula:

$$-\!\!\left( R\text{-}NH \right)_n\!-$$

wherein R represents an alkylene group having 2 to 8 carbon atoms of a straight or branched structure, a plurality of R may be the same or different, and n indicates the polymerization degree of the alkyleneimine polymer and denotes a number so that the polymer has a molecular weight in the range from 300 to 70,000.

8. The process according to claim 7, wherein said alkyleneimine polymer has a molecular weight of 50,000 or lower.

9. The process according to claim 8, wherein said alkyleneimine polymer has a molecular weight of 10,000 or lower.

10. An activated sludge disposal agent comprising an aqueous solution of an alkyleneimine polymer.

11. The activated sludge disposal agent according to claim 10, wherein said alkyleneimine polymer comprises the unit represented by the following formula:

$$-\!\!\left( R\text{-}NH \right)_n\!-$$

wherein R represents an alkylene group having 2 to 8 carbon atoms of a straight or branched structure, a

plurality of R may be the same or different, and n indicates the polymerization degree of the alkyleneimine polymer and denotes a number so that the polymer has a molecular weight in the range from 300 to 70,000.

12. The activated sludge disposal agent according to claim 11, wherein said alkyleneimine polymer has a molecular weight of 50,000 or lower.

13. The activated sludge disposal agent according to claim 12, wherein said alkyleneimine polymer has a molecular weight of 10,000 or lower.

14. An activated sludge disposal agent according to claim 10, wherein the alkyleneimine polymer of aqueous solution has an alkyleneimine polymer concentration of 0.1 to 10% by weight.

# INTERNATIONAL SEARCH REPORT

International Application No PCT/JP89/01136

**I. CLASSIFICATION OF SUBJECT MATTER** (if several classification symbols apply, indicate all) [6]

According to International Patent Classification (IPC) or to both National Classification and IPC

Int. $Cl^5$ C02F3/12

**II. FIELDS SEARCHED**

Minimum Documentation Searched [7]

| Classification System | Classification Symbols |
|---|---|
| IPC | C02F3/12 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 49-3468 (Kao Corporation), 12 January 1974 (12. 01. 74), Claim, Examples 1 and 2, (Family: none) | 1 - 14 |
| X | JP, B2, 55-41833 (KURITA Water Industries Ltd.), 27 October 1980 (27. 10. 80), Claim, Tables 1 and 2, (Family: none) | 1 - 14 |
| Y | JP, A, 58-58194 (Nishikawara Akira), 6 April 1983 (06. 04. 83), Claim, page 2, upper left column, line 13 to page 2, upper right column, line 16, Example 1 and Table 2, (Family: none) | 1 - 14 |
| A | JP, A, 63-218297 (Mitsubishi Monsanto Chemical Co.), 12 September 1988 (12. 09. 88), Claim, (Family: none) | 6 - 9 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 5, 1990 (05. 01. 90) | January 16, 1990 (16. 01. 90) |
| **International Searching Authority** | **Signature of Authorized Officer** |
| Japanese Patent Office | |

International Application No. PCT/JP89/01136

**FURTHER INFORMATION CONTINUED FROM THE SECOND SHEET**

| | | |
|---|---|---|
| A | JP, A, 63-218296 (Mitusbishi Monsanto Chemical Co.), 12 September 1988 (12. 09. 88), Claim, (Family: none) | 2 |
| A | JP, A, 63-218295 (Mitsubishi Monsanto Chemical Co.), 12 September 1988 (12. 09. 88), Claim, (Family: none) | 2 |
| A | JP, A, 63-218294 (Mitsubishi Monsanto Chemical Co.), 12 September 1988 (12. 09. 88), Claim, (Family: none) | 2 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers , because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers , because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest

☐ No protest accompanied the payment of additional search fees